# EUROPEAN PATENT APPLICATION

(11) **EP 1 863 277 A2**
(43) Date of publication of application: **05.12.2007**
(21) Application number: 07010452.6
(22) Date of filing: 25.05.2007
(51) Int. Cl.: H04N 5/445, H04N 5/57

(54) **Picture display apparatus**

(30) Priority: 31.05.2006 JP 2006151752
(71) Applicant: Funai Electric Co., Ltd., Daito-shi, Osaka 574-0013 (JP)
(72) Inventor: Tokoshima, Susumu, Daito-shi Osaka 574-0013 (JP)
(74) Representative: Grünecker, Kinkeldey, Stockmair & Schwanhäusser Anwaltssozietät

(57) **Abstract**

Disclosed is a picture display apparatus, including: a display section including a display screen, the display screen including a first display region which displays a first picture based on a first picture signal of a plurality of picture signals, and a second display region which displays a second picture based on a second picture signal and which is adjacent to the first display region; and an alternative image display control section which displays, in the first display region, an alternative image a brightness of which is varied with time, when the first picture signal is not input or when display of the first picture based on the first picture signal is restricted.

## Description

### BACKGROUND OF THE INVENTION

### 1. Field of the Invention

The present invention relates to a picture display apparatus, and more particularly to a picture display apparatus capable of displaying a picture based on a plurality of picture signals on a display screen.

### 2. Description of the Related Art

Conventionally, picture display apparatuses capable of showing a plurality of programs in one display screen by dividing the display screen into a plurality of regions are becoming increasingly common. There are various methods for dividing the display screen. For example, there is a method called a Picture in Picture in which a parent screen is displayed on the entire display screen and a child screen is displayed in a portion of the parent screen in a scale-down manner, and a method called a Twin View in which a display screen is divided into two regions.

In a picture display apparatus in which a plurality of screens are displayed, however, when a television broadcast signal of a selected program cannot be received, or when a selected program is a viewing restricted program and its picture is blocked, or when a picture signal from an external video apparatus connected to a television receiver is stopped, etc., there are a region where a picture is displayed and a region where a picture is not displayed in one display screen.

In this case, for example, Japanese Patent Application Laid-open Publication No. 2002-2717113 discloses a television receiver in which when a no-picture signal CH is selected for a parent screen, while a switching circuit of a parent screen picture signal is controlled to process, the same signal as that of a child screen is processed as a parent screen signal, a microprocessor forms and outputs on-screen screen signals such that on-screen R, G and B signals become black during a period other than a child screen using an on-screen character generating circuit and switches to the on-screen screens by means of an output switching circuit and with this, a parent screen is black and a stable child screen can be obtained also when there is no picture signal.

Also, for example, Japanese Patent Application Laid-open Publication No. 2005-167662 discloses an image display apparatus having a fixed-image outputting means which outputs a fixed image data for a display screen signal from which an error is detected when transmission error of image data is detected, to prevent display of error image even when the transmission error occurs, and a display effect of multi-display can be maintained. According to the technique disclosed in the Japanese Patent Application Laid-open Publication No. 2005-167662, by enlarging and displaying the alternative fixed image data, it is possible to prevent a region where no picture is displayed from being generated.

Also, for example, Japanese Patent Application Laid-open Publication No. 2001-195048 proposes a picture display apparatus in which if an operation signal is not sent from a remote control unit, etc. within a preset time, a state of the picture display apparatus is switched to a multi-screen display state to stop picture output display for a parent screen, and is also switched to a picture output display state in which only a child screen is displayed, thereby preventing image burn-in.

The television receiver of the Japanese Patent Application Laid-open Publication No. 2002-2717113 has a problem that if a child screen is displayed for a long time on a black screen, or when a black screen is displayed adjacent to a region where a picture is displayed, image burn-in is generated. When an alternative fixed image data is displayed in a region where no picture is displayed as in the Japanese Patent Application Laid-open Publication No. 2005-167662 also, there is also a possibility that image burn-in is generated. According to the Japanese Patent Application Laid-open Publication No. 2001-195048, if an operation signal is not sent from the remote control unit within the preset time, the state of the picture display apparatus is switched to the multi-screen display state to stop the picture output display for the parent screen, and is also switched to the picture output display state in which only the child screen is displayed. With this, the image burn-in can be prevented, but there is a problem that a user cannot recognize that a program selected by the user cannot be displayed, and as a result the user tends to select the program again, and the operability is deteriorated.

### SUMMARY OF THE INVENTION

It is a main object of the present invention to provide a picture display apparatus in which a user can easily recognize that a program selected by the user cannot be displayed, and image burn-in can be prevented.

According to a first aspect of the present invention, there is provided a picture display apparatus, comprising:
a display section including a display screen, the display screen including a first display region which displays a first picture based on a first picture signal of a plurality of picture signals, and a second display region which displays a second picture based on a second picture signal and which is adjacent to the first display region;
an alternative image display control section to display, in the first display region, an alternative image a brightness of which is varied with time, when the first picture signal is not input or when display of the first picture based on the first picture signal is restricted;
a brightness detecting section to obtain an average brightness of the second picture displayed in the second display region; and
a setting section to set color and/or pattern of the alternative image displayed in the first display region by the alternative image display control section; wherein
the alternative image display control section varies the brightness of the alternative image such that a brightness difference between the average brightness detected by the brightness detecting section and the brightness of the alternative image falls within a predetermined range.

According to a second aspect of the present invention, there is provided a picture display comprising:
a display section including a display screen, the display screen including a first display region which displays a first picture based on a first picture signal of a plurality of picture signals, and a second display region which displays a second picture based on a second picture signal and which is adjacent to the first display region; and
an alternative image display control section which displays, in the first display region, an alternative image a brightness of which is varied with time, when the first picture signal is not input or when display of the first picture based on the first picture signal is restricted.

### BRIEF DESCRIPTION OF THE DRAWINGS

The above and further objects, features and advantages of the present invention will become more apparent from the following detailed description taken in conjunction with the accompanying drawings, wherein:
FIG. 1 is a front view showing an example of a television receiver in preferred embodiments of the present invention;
FIG. 2 is a block diagram showing a structure of essential portions of the television receiver in the preferred embodiments;
FIG. 3 is a diagram showing an example of an alternative image setting screen displayed on a display section when a setting program is executed;
FIGS. 4A to 4E are diagrams showing examples of an alternative image displayed in a first display region when an alternative image display control program is executed;
FIG. 5 is a flowchart showing determining processing of whether a picture can or cannot be displayed executed by a CPU; and
FIG. 6 is a flowchart showing alternative image displaying processing based on executions of a brightness detecting program and an alternative image display control program by the CPU.

### DESCRIPTION OF THE PREFERRED EMBODIMENTS

In preferred embodiments, a television receiver 100 will be explained as a picture display apparatus which can display a picture based on a plurality of picture signals.

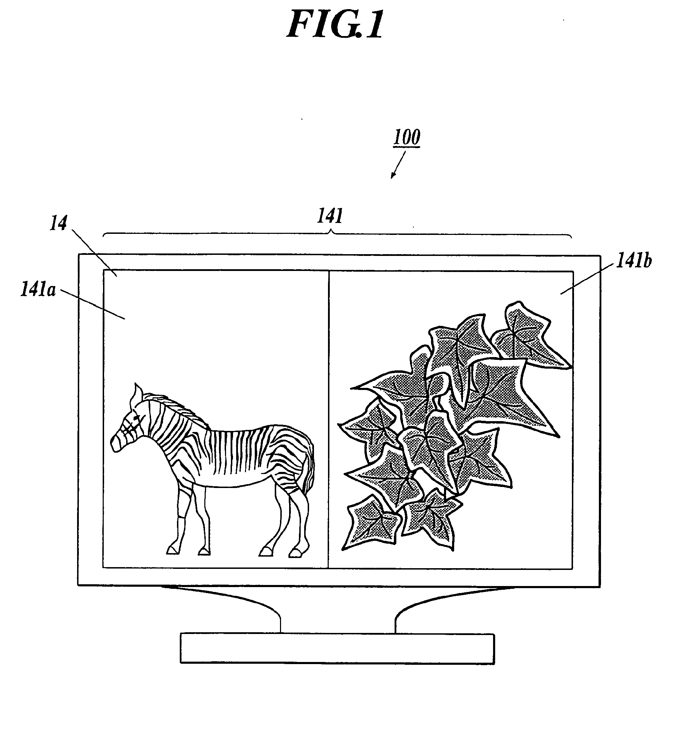

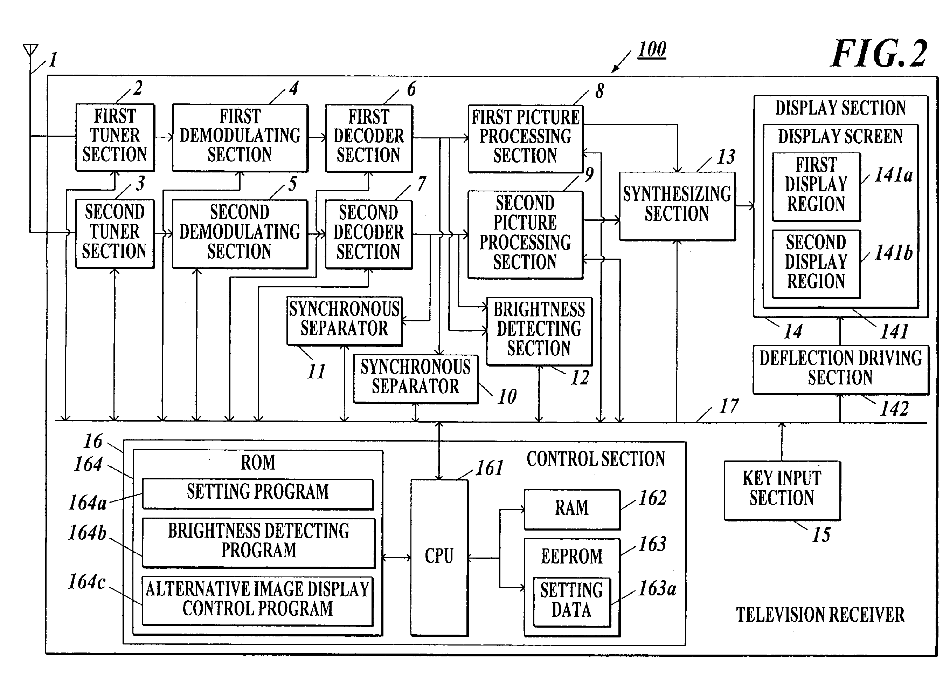

FIG. 1 is a front view showing an example of the television receiver 100 of the embodiments. FIG. 2 is a block diagram showing a structure of essential portions of the television receiver 100 of the embodiments.

As shown in FIGS. 1 and 2, the television receiver 100 has a display section 14 including a display screen 141. When a later-described two-screen display function is selected, the display screen 141 is divided into a first display region 141a and a second display region 141b which is adjacent to the first display region 141a. A picture based on a first picture signal is displayed in the first display region 141a, and a picture based on a second picture signal is displayed in the second display region 141b. A user can watch two different programs at the same time.

In the television receiver 100 of the preferred embodiments of the present invention, when the first picture signal is not input or when a picture based on the first picture signal cannot be displayed due to viewing restriction, etc., an alternative image whose brightness is varied with time is displayed in the first display region 141a. With this, it is possible to prevent image burn-in which is generated in a boundary between the first display region 141a and the second display region 141b, and a user can recognize that a first picture signal is not input or a picture based on the first picture signal cannot be displayed due to some reason.

In the following description, a case in which one of the display regions of the display screen 141 (e.g., a right region) is the first display region 141a, and the other display region of the display screen 141 (e.g., a left region) is the second display region 141b will be explained. Either of the right and left regions of the display screen 141 may be the first display region 141a or the second display region 141b. Further, either of the two picture signals which are input to the television receiver 100 can be the first picture signal or the second picture signal.

As shown in FIG. 2, the television receiver 100 includes for example, an antenna 1 for receiving a television broadcast signal which is the first picture signal and a television broadcast signal which is the second picture signal, a first tuner section 2 for selecting the first picture signal of a predetermined frequency input from the antenna 1, a second tuner section 3 for selecting the second picture signal of a predetermined frequency input from the antenna 1, a first demodulating section 4 for demodulating the first picture signal selected by the first tuner section 2, a second demodulating section 5 for demodulating the second picture signal selected by the second tuner section 3, a first decoder section 6 for decoding the first picture signal demodulated by the first demodulating section 4, a second decoder section 7 for decoding the second picture signal demodulated by the second demodulating section 5, a first picture processing section 8 for subjecting the first picture signal to a predetermined picture processing, a second picture processing section 9 for subjecting the second picture signal to a predetermined picture processing, a synchronous separator 10 for separating a synchronous signal from the first picture signal, a synchronous separator 11 for separating a synchronous signal from the second picture signal, a brightness detecting section 12 which detects an average brightness of the first picture signal which is input to the first picture processing section 8 or an average brightness of the second picture signal which is input to the second picture processing section 9, a synthesizing section 13 for synthesizing the first picture signal which is input from the first picture processing section 8 and the second picture signal which is input from the second picture processing section 9, a display section 14 for displaying a picture based on the first picture signal which is input from the synthesizing section 13 in the first display region 141a and displaying a picture based on the second picture signal in the second display region 141b, a deflection driving section 142 for controlling deflection in the display section 14, a key input section 15 which is key-operated by a user, a control section 16 for controlling the entire television receiver 100 in a centralized manner, and the like. These members are connected to one another through a bus 17.

The antenna 1 is for example, oriented to a predetermined direction and disposed outdoors. The antenna 1 receives the first picture signal and the second picture signal which are radio frequency (RF) television broadcast signals sent from a television broadcast station (not shown).

Each of the first tuner section 2 and the second tuner section 3 includes, for example, a radio frequency amplifier circuit, and a frequency changing circuit which comprises a local oscillation circuit and a mixing circuit (these elements are not shown). The first tuner section 2 and the second tuner section 3 amplify, in the radio frequency amplifier circuits, the television broadcast signal which is the first picture signal input from the antenna 1, etc. or the television broadcast signal which is the second picture signal input from the antenna 1, etc., mix the signals with a local oscillation signal which is output from the local oscillation circuit in the mixing circuit, receive an intermediate-frequency signal (IF signal) in a specific frequency band in accordance with a control signal from the control section 16 for selecting a specific frequency, and subject the intermediate-frequency signal to a predetermined processing, and output to the first demodulating section 4 or the second demodulating section 5.

The first demodulating section 4 and the second demodulating section 5, for example, carry out processings such as OFDM (Orthogonal Frequency Division Multiplexing) demodulation and correction of error for an intermediate-frequency signal which is the first picture signal output from the first tuner section 2 or an intermediate-frequency signal which is the second picture signal output from the second tuner section 3 in accordance with a control signal from the control section 16, create a transport stream (TS) and output the same to the first decoder section 6 or the second decoder section 7.

The first decoder section 6 and the second decoder section 7, for example, divide transport stream which is input from the first demodulating section 4 or the second demodulating section 5 into a video stream, an audio stream and PSI/SI (Program Specific Information/Service Information), etc., under the specification of MPEG2 (Moving Picture Experts Group 2) in a TS decoder (not shown), output the video stream to a video decoder (not shown) and output the audio stream to an audio decoder (not shown), and supply data included in the PSI/SI to the control section 16. The video decoder decodes the video stream which is input from the TS decoder, carries out reverse DCT conversion and motion compensation control, etc., produces picture data, and outputs the same to the first picture processing section 8 or the second picture processing section 9.

The synchronous separator 10 and the synchronous separator 11 take out a vertical synchronous signal and a horizontal synchronous signal from the first picture signal or the second picture signal and output the same to the control section 16. More specifically, the synchronous separator 10 and the synchronous separator 11, for example, utilize a difference in amplitude between the synchronous signal and the picture signal, and take out the vertical synchronous signal and horizontal synchronous signal by cutting the picture signal by cut-off characteristics of a transistor, etc. Then, a picture based on the first picture signal is displayed in the first display region 141a and a picture based on the second picture signal is displayed in the second display region 141b in accordance with the synthesizing control signal for controlling the synthesizing section 13 produced by the control section 16 based on the synchronous signal input from the synchronous separator 10 and the synchronous signal input from the synchronous separator 11.

The brightness detecting section 12 detects an average brightness of the first picture signal input to the first picture processing section 8 or an average brightness of the second picture signal input to the second picture processing section 9 for every one frame, and outputs a result of detection of the average brightness to the control section 16.

The first picture processing section 8 subject the first picture signal input from the first decoder section 6 to a predetermined picture processing, produces RGB signals and outputs the same to the synthesizing section 13.

More specifically, the first picture processing section 8 includes a Y/C separation circuit, a color signal demodulation circuit, a matrix circuit, etc. (these elements are not shown). In the Y/C separation circuit, a brightness signal Y and a color signal C are separated from the first picture signal which is a composite video signal in which the brightness signal Y, the color signal C and the synchronous signal are mixed. In the color signal demodulation circuit, the color signal C is demodulated to color-difference signals of an R-Y signal and a B-Y signal. The matrix circuit produces a G-Y signal from the color-difference signals R-Y and B-Y using a predetermined derivation equation, and adds a brightness signal Y to each of the color-difference signals R-Y, B-Y and G-Y, to produce RGB signals. The first picture processing section 8 subjects the first picture signal to a brightness adjusting processing based on the brightness adjusting signal which is output from the control section 16, and subjects the first picture signal to a color adjusting processing based on the color adjusting signal which is output from the control section 16.

The second picture processing section 9 subjects the second picture signal which is input from the second decoder section 7 to a predetermined picture processing, to produce RGB signals and outputs the same to the synthesizing section 13.

More specifically, the second picture processing section 9, for example, includes the same structure as that of the first picture processing section 8. The second picture processing section 9 includes a Y/C separation circuit, a color signal demodulation circuit, a matrix circuit, etc. (these elements are not shown). In the Y/C separation circuit, a brightness signal Y and a color signal C are separated from the second picture signal which is a composite picture signal in which the brightness signal Y, the color signal C and the synchronous signal are mixed. In the color signal demodulation circuit, the color signal C is demodulated to color-difference signals of an R-Y signal and a B-Y signal. The matrix circuit produces a G-Y signal from the color-difference signals R-Y and B-Y using a predetermined derivation equation, and adds a brightness signal Y to each of the color-difference signals R-Y, B-Y and G-Y, to produce RGB signals. The second picture processing section 9 subjects the second picture signal to a brightness adjusting processing based on the brightness adjusting signal which is output from the control section 16, and subjects the second picture signal to a color adjusting processing based on the color adjusting signal which is output from the control section 16.

The synthesizing section 13 synthesizes an image based on the RGB signals which are the first picture signal input from the first picture processing section 8 and an image based on the RGB signals which are the second picture signal input from the second picture processing section 9 based on a synthesizing control signal from the control section 16.

More specifically, the synthesizing section 13 switches the connection to the first picture processing section 8 or the second picture processing section 9 at predetermined timing based on the synthesizing control signal generated based on the synchronous signal input from the synchronous separating section 10 and the synchronous signal input from the synchronous separating section 11, thereby synthesizing the first picture signal and the second picture signal, and outputs the synthesized signal to the display section 14. As a result, a picture based on the first picture signal is displayed in the display region 141a of the display section 14, and a picture based on the second picture signal is displayed in the second display region 141b.

The display section 14 includes the display screen 141, etc., and the display screen 141 comprises the first display region 141a and the second display region 141b. Electron beams emitted from three electron guns of RGB collide against a fluorescent screen (not shown) comprising crystal grains which receive impact of the electron beams and emit light by control of the deflection driving section 142, and a picture based on the synthesized signal which is output from the synthesizing section 13 is displayed on the display screen 141. More specifically, when a user operates the key input section 15 and selects a two-screen display function in a menu screen or the like, the display section 14 divides the display screen 141 into the first display region 141a and the second display region 141b which is adjacent to the first display region 141a. A picture based on the first picture signal is displayed in the first display region 141a, and a picture based on the second picture signal is displayed in the second display region 141b. When the user operates the key input section 15 and selects one-screen display function, the display section 14 displays one picture based on the first picture signal or the second picture signal in the first display region 141a and the second display region 141b.

The deflection driving section 142 controls deflection in the display section 14 in accordance with a vertical deflection signal and a horizontal deflection signal produced in the control section 16 based on a vertical synchronous signal and a horizontal synchronous signal which are input from the synchronous separator 10 and the synchronous separator 11.

More concretely, the deflection driving section 142, for example, flows sawtooth current based on the horizontal synchronous signal and the vertical synchronous signal which are respectively input from the synchronous separator 10 and the synchronous separator 11 to horizontal and vertical deflection coils (not shown) of the display section 14, and the deflection driving section 142 controls vertical and lateral directions of electron beams emitted from the electron guns (not shown) by the magnetic field generated by the sawtooth current.

The key input section 15 is, for example, a remote control unit and the like, includes a plurality of keys, and if a user presses one of the keys, an input operation signal corresponding to the pressed key is output to the control section 16.

The control section 16 includes a CPU (Central Processing Unit) 161, a RAM (Random Access Memory) 162, an EEPROM (Electronically Erasable and Programmable Read Only Memory) 163, a ROM (Read Only Memory) 164, and the like.

The CPU 161 executes various programs stored in the ROM 164 in accordance with input signals which are input from various sections of the television receiver 100 through the bus 17, and outputs control signals based on execution of the various programs to various sections through the bus 17, thereby controlling the entire operation of the television receiver 100 in a centralized manner.

The RAM 162 is, for example, a volatile semiconductor memory, temporarily stores a result of processing generated when the various programs are executed by the CPU 161 or input data, and functions as a work area of the CPU 161.

The EEPROM 163 is, for example, a rewritable semiconductor memory, and stores setting data 163a of color/pattern of an alternative image which is set by a user when a setting program 164a (which will be described later) is executed by the CPU 161. Alternatively, for example, initial setting data of color/pattern may be stored in a different region (not shown).

The ROM 164 is, for example, a nonvolatile semiconductor memory, and stores various control programs executed by the CPU 161, data for processing of the control programs, and the like.

More concretely, the setting program 164a, a brightness detecting program 163b, an alternative image display control program 163c, etc., are stored in the ROM 164.

The setting program 164a is, for example, a program for the CPU 161 to implement a function for setting color and/or pattern of an alternative image to be displayed in the first display region 141a when the (later-described) alternative image display control program 163c is executed.

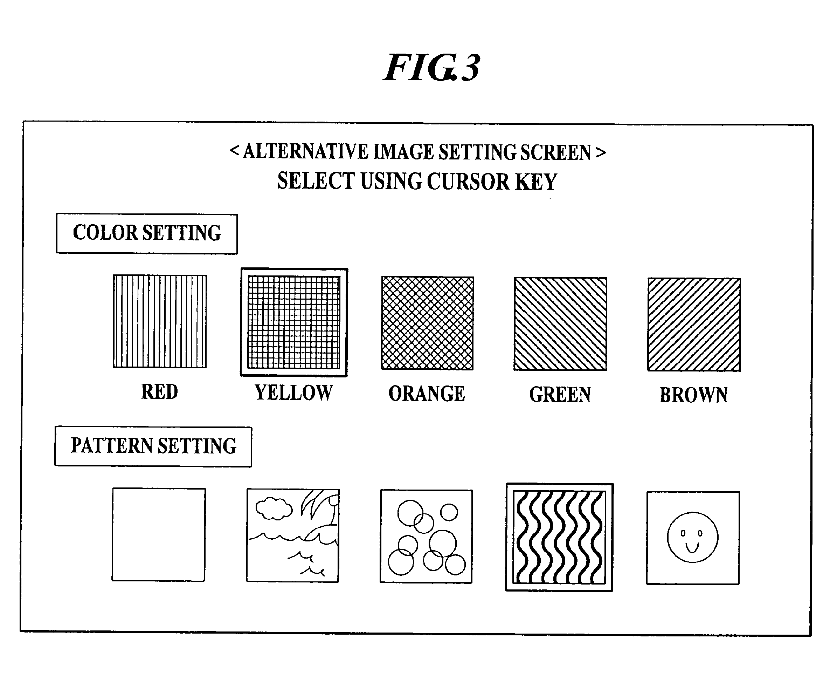

More specifically, when a user operates the key input section 15 such as a remote control unit, etc. and an input operation signal which requests display of a setting screen for setting color/pattern of the alternative image is input to the control section 16, the CPU 161 executes the setting program 164a and displays the alternative image setting screen for setting color/pattern of the alternative image on the display section 14. In the alternative image setting screen, for example, colors and patterns of the alternative image can be selected from a plurality of templates as shown in FIG. 3. When the user operates the key input section 15 and selects desired color and pattern in the setting screen, the setting data 163a of the selected color and pattern is stored in the EEPROM 163. The later-described alternative image display control program 163c is executed based on the setting data 163a stored in the EEPROM 163, thereby determining an alternative image to be displayed in the first display region 141a. That is, image data having the pattern indicated for the user in the alternative image setting screen is stored in a predetermined region of the ROM 164, among such data the image data determined as the alternative image is read out by the CPU 161 in the execution of the (later-described) alternative image display control program 163c, color is adjusted and brightness is adjusted based on the color which is set in the alternative image setting screen in the first picture processing section 8, and the thus processed image data is displayed as the alternative image in the first display region 141a. The templates for the pattern of the alternative image are moving pictures, for example, and moving pictures which are effective for preventing image burn-in are indicated for the user.

The CPU 161 executes the setting program 164a and functions as a setting means.

The brightness detecting program 163b is, for example, a program for making the CPU 161 implement a function to obtain an average brightness of a picture displayed in the second display region 141b.

More specifically, the CPU 161 detects, for every one frame, an average brightness level (APL) of the second picture signal which is input to the second picture processing section 9 in the brightness detecting section 12, and outputs the detected average brightness level to the control section 16. The average brightness level is, for example, indicated with 256 level gray scales from brightness value 0 to brightness value 255.

The CPU 161 executes the brightness detecting program 163b and functions as a brightness detecting means together with the brightness detecting section 12.

When the first picture signal is not input to the CPU 161 or when display of a picture based on the first picture signal is restricted, the alternative image display control program 163c displays, in the first display region 141a, an alternative image whose brightness is stepwisely varied with time, and varies the brightness of the alternative image such that a brightness difference of the average brightness detected by the execution of the brightness detecting program 163b and the brightness of the alternative image falls within a predetermined range.

More specifically, when the first picture signal is not input or when display of a picture based on the first picture signal is restricted for some reasons such as, a television broadcast signal of a program selected by operation of the key input section 15 can not be received, the selected program is a viewing restricted program and a picture is blocked, a picture signal from an external picture device connected to the television receiver 100 is stopped, etc. , the CPU 161 allows the first display region 141a to display the alternative image based on the setting data 163a stored in the EEPROM 163 by execution of the setting program 164a. The alternative image is an image having the color and the pattern which are set by execution of the setting program 164a. Image data stored in a predetermined region (not shown) in the ROM 164 is read, brightness and color are adjusted in the first picture processing section 8, and the alternative image is displayed in the first display region 141a. More specifically, the CPU 161 outputs a brightness adjusting signal to the first picture processing section 8, so that brightness adjustment is performed of varying the brightness value by a predetermined brightness value (for example, brightness value 5) in a predetermined range (brightness values -10 to +10 with respect to the average brightness level for example) with respect to the average brightness level of a picture based on the second picture signal displayed in the second display region 141b detected by execution of the brightness detecting program 163b at predetermined time intervals (e.g., every five seconds), and the CPU 161 outputs a color adjusting signal to the first picture processing section 8 so that color adjustment is effected of making a color of the alternative image to be a color which is set by execution of the setting program 164a.

The CPU 161 executes the alternative image display control program 163c, and functions as an alternative image display control means.

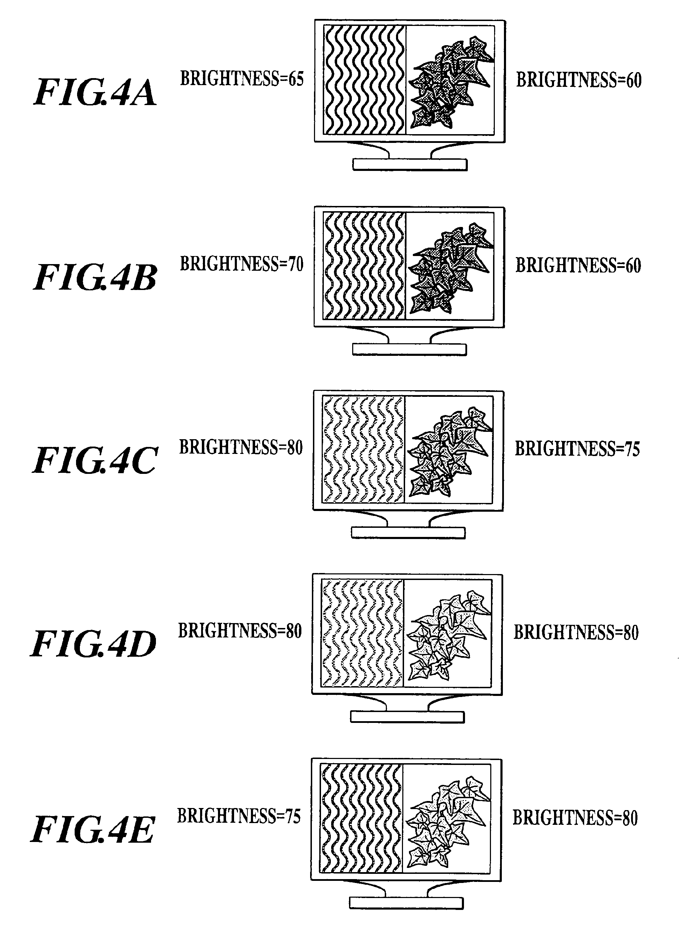

An example of an alternative image displayed in the first display region 141a by execution of the alternative image display control program 163c will be explained concretely using FIGS. 4A to 4E.

When the CPU 161 determines that a first picture signal is not input to the television receiver 100 or display of a picture based on a first picture signal which is input to the television receiver 100 is restricted, the CPU 161 refers to the setting data 163a stored in the EEPROM 163, generates an alternative image having the color and the pattern of the setting data 163a based on the image data stored in the ROM 164, and displays the produced alternative image in the first display region 141a. An average brightness level of a picture displayed in the second display region 141b is detected every one frame by the brightness detecting section 12, and the brightness of the alternative image is stepwisely varied within the predetermined range with respect to the average brightness level of the picture of the second display region 141b detected by the brightness detecting section 12 in the first picture processing section 8.

More specifically, for example, when the average brightness level of the picture of the second display region 141b detected by the brightness detecting section 12 is brightness value 60, the CPU 161 sets a brightness of the alternative image to brightness value 65 obtained by computing to add +5 to the brightness value 60 (FIG. 4A), and after five seconds, if the average brightness level of the picture of the second display region 141b detected by the brightness detecting section 12 is brightness value 60, the brightness of the alternative image is set to brightness value 70 by computing to add +10 to the brightness value 60 (FIG. 4B). After another five seconds, when the average brightness level of the picture of the second display region 141b detected by the brightness detecting section 12 is brightness value 75, the brightness of the alternative image is set to brightness value 80 by computing to add +5 to the brightness value 75 (FIG. 4C), and after yet another five seconds, if the average brightness level of the picture of the second display region 141b is brightness value 80, brightness of the alternative image is set to brightness value 80 by computing to add ±0 to the brightness value 80 (FIG. 4D). After yet another five seconds, when the average brightness level of the picture of the second display region 141b is brightness value 80, the brightness of the alternative image is set to brightness value 75 by computing to add -5 to the brightness value 80 (FIG. 4E). That is, when the average brightness of the picture of the second display region 141b detected every five seconds is varied in a manner of 60 → 60 → 75 → 80 → 80, the brightness of the alternative image of the first display region 141a is varied in a manner of 65 → 70 → 80 → 80 → 75.

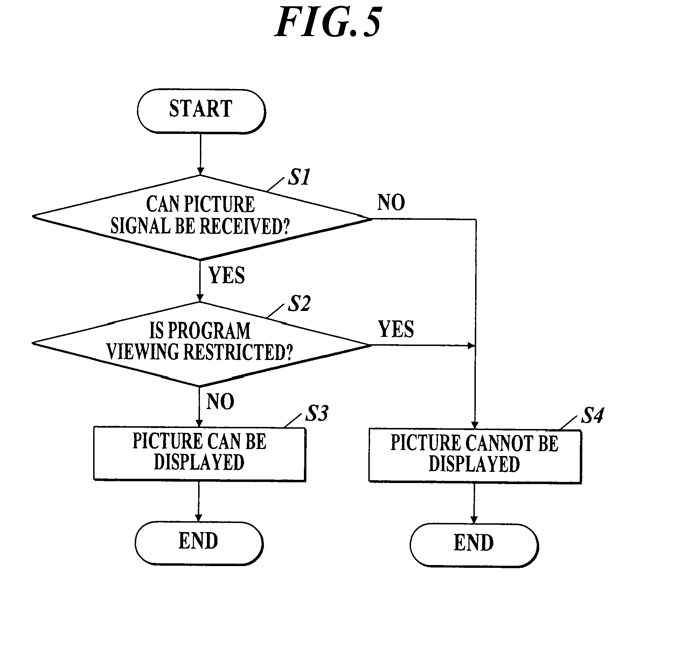

Next, determining processing by the CPU 161 of whether a picture can or cannot be displayed will be explained with reference to FIG. 5.

In step S1 in FIG. 5, the CPU 161 determines whether a picture signal of a channel selected by a user's key operation, etc., can be received by the first tuner section 2 or the second tuner section 3. In step S1, if the CPU 161 determines that the picture signal cannot be received (step S1; No), the procedure is advanced to step S4. On the other hand, if the CPU 161 determines that the picture signal can be received in step S1 (step S1; Yes), the CPU 161 determines whether a picture signal which is set by a user corresponds to a viewing restricted program in step S2. If the CPU 161 determines that the picture signal corresponds to the viewing restricted program in step S2 (step S2; Yes), the procedure is advanced to step S4. If the CPU 161 determines that the picture signal does not correspond to the viewing restricted program (step S2; No), in step S3, the CPU 161 determines that the picture can be displayed, to shift the procedure to the above described picture signal processing, and this processing is completed. In step S4, the CPU 161 determines that the picture based on the picture signal cannot be displayed, and this processing is completed.

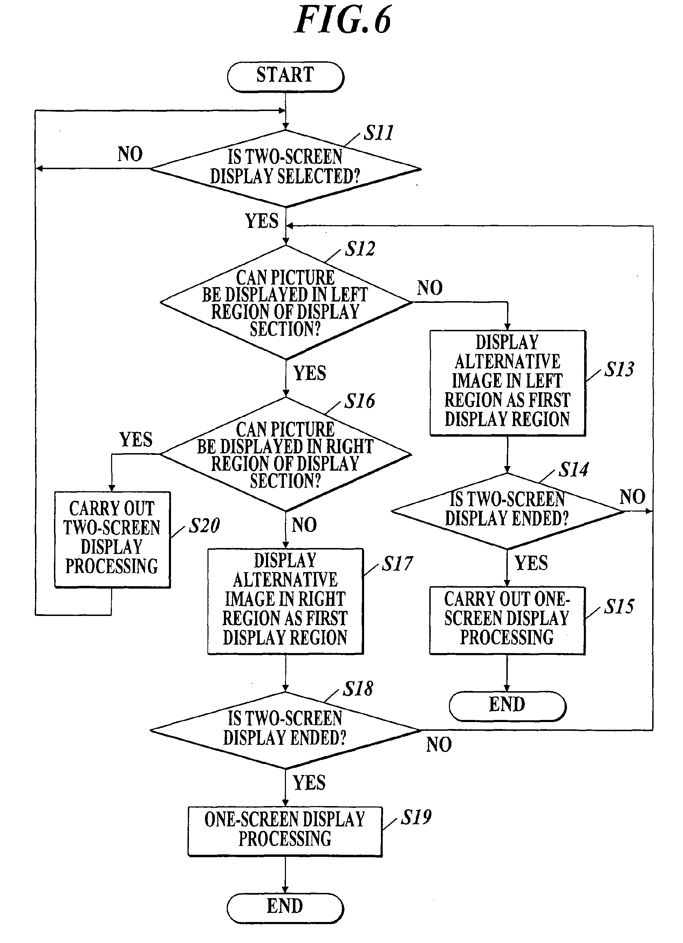

Next, alternative image displaying processing based on executions of the brightness detecting program 163b and the alternative image display control program 163c by the CPU 161 will be explained with reference to FIG. 6.

In step S11 in FIG. 6, the CPU 161 determines whether a two-screen display setting for displaying two different pictures in the first display region 141a and the second display region 141b is selected. If the CPU 161 determines that the two-screen display setting is selected in step S11 (step S11; Yes), the CPU 161 then executes the above mentioned determining processing of whether a picture can or cannot be displayed, and determines whether a picture in the left region of the display section 14 can be displayed (step S12). In step S12, if the CPU 161 determines that a picture cannot be displayed in the left region of the display section 14 (step S12; No), the left region is set as the first display region 141a and the right region is set as the second display region 141b, an average brightness of the picture displayed in the second display region 141b is detected, an alternative image whose brightness is varied stepwisely with time is displayed in the first display region 141a based on the detected average brightness(step S13), and the CPU 161 determines whether an instruction for ending the display of two screens is input, etc. and the display of the two screens is ended in step S14. If the CPU 161 determines that that the two-screen display is not ended in step S14 (step S14; No), the procedure is returned to step S12 and the above-described procedure is repeated. If the CPU 161 determines that the two-screen display is ended (step S14; Yes), the procedure is shifted to one-screen display processing in step S15, and this routine is ended.

On the other hand, if the CPU 161 determines that a picture can be displayed in the left region of the display section 14 (step S12; Yes) in step S12, the CPU 161 determines whether a picture can be displayed in the right region of the display section 14 in the above mentioned determining processing of whether a picture can or cannot be displayed (step S16). If the CPU 161 determines that a picture cannot be displayed in the right region of the display section 14 in step S16 (step S16; No), the right region is set as the first display region 141a and the left region is set as the second display region 141b, an average brightness of the picture displayed in the second display region 141b is detected, an alternative image whose brightness is varied stepwisely with time is displayed in the first display region 141a based on the detected average brightness(step S17), and the CPU 161 determines whether an instruction for ending the display of two screens is input, etc. and the display of the two screens is ended in step S18. If the CPU 161 determines that that the two-screen display is not ended in step S18 (step S18; No), the procedure is returned to step S12 and the above-described procedure is repeated. Alternatively, if the CPU 161 determines that the two-screen display is ended (step S18; Yes), the procedure is shifted to one-screen display processing in step S19, and this routine is ended.

If the CPU 161 determines that a picture can be displayed in the right region of the display section 14 (step S16; Yes) in step S16, the two-screen display processing is carried out in step S20, the procedure is returned to step S 11, and this routine is repeated.

According to the television receiver 100 of the embodiment explained above, the display screen 141 of the display section 14 includes the first display region 141a which displays a picture based on the first picture signal of the plurality of picture signals, and the second display region 141b which is adjacent to the first display region 141a and displays a picture based on the second picture signal. When the first picture signal is not input or when display of a picture based on the first picture signal is limited, the CPU 161 executes the alternative image display control program 163c to display, an alternative image whose brightness is varied with time in the first display region 141a, and the CPU 161 executes the brightness detecting program 163b, so that an average brightness of the picture displayed in the second display region 141b is obtained. The CPU 161 executes the alternative image display control program 163c, to vary brightness of the alternative image such that a brightness difference between the average brightness detected by executing the brightness detecting program 163b and the brightness of the alternative image falls within the predetermined range. Therefore, it is possible to provide a television receiver 100 capable of being easily recognized that a program selected by a user cannot be displayed by displaying the alternative image in the first display region 141a, and capable of preventing image burn-in by varying the brightness of the alternative image with time.

Since the color and/or pattern of the alternative image displayed by executing the alternative image display control program 163c is set by executing the setting program 164a, various preferences of a user can be incorporated in the alternative image to be displayed in the first display region.

The present invention is not limited to the above illustrated embodiments, and various improvements and changes in settings may be made within a range not departing from the subject matter of the present invention.

For example, the alternative image is not limited to a moving image, and static pictures may be switched from one to another sequentially.

The number of display regions of the display screen 141 may be three or more, and the display section 14 may employ a child screen displayed in a scale-down manner in a portion of a parent screen which is displayed on the entire display screen 141 (Picture in Picture (PinP)).

The brightness of the alternative image by execution of the alternative image display control program 163c may not be varied stepwisely, and may be varied at a random fashion.

The average brightness of the picture displayed in the second display region 141b by execution of the brightness detecting program 163b may not be detected sequentially every one frame, and the brightness may be detected within a given period.

The picture display apparatus is not limited to the television receiver 100, and may be a personal computer, etc. The display section 14 is not limited to a CRT (Cathode Ray Tube) display, and may be a PDP (Plasma Display Panel), a LCD (Liquid Crystal Display),an organic EL (Electro Luminescence) display and the like.

According to a first aspect of the preferred embodiments of the present invention, there is provided a picture display apparatus, comprising:
a display section including a display screen, the display screen including a first display region which displays a first picture based on a first picture signal of a plurality of picture signals, and a second display region which displays a second picture based on a second picture signal and which is adjacent to the first display region;
an alternative image display control section to display, in the first display region, an alternative image a brightness of which is varied with time, when the first picture signal is not input or when display of the first picture based on the first picture signal is restricted;
a brightness detecting section to obtain an average brightness of the second picture displayed in the second display region; and
a setting section to set color and/or pattern of the alternative image displayed in the first display region by the alternative image display control section, wherein
the alternative image display control section varies the brightness of the alternative image such that a brightness difference between the average brightness detected by the brightness detecting section and the brightness of the alternative image falls within a predetermined range.

In the picture display apparatus, the display screen of the display section includes the first display region which displays the first picture based on the first picture signal of the plurality of picture signals, and the second display region which displays the second picture based on the second picture signal which is adjacent to the first display region, the alternative image display control section displays, in the first display region, the alternative image whose brightness is varied with time when the first picture signal is not input or when display of the first picture based on the first picture signal is restricted, the brightness detecting section obtains the average brightness of the second picture displayed in the second display region, and the alternative image display control section varies brightness of the alternative image such that the brightness difference between the average brightness detected by the brightness detecting section and brightness of the alternative image falls within the predetermined range. Therefore, it is possible to provide a picture display apparatus in which since the alternative image is displayed in the first display region, a user can easily recognize that a program selected by the user cannot be displayed, and since the brightness of the alternative image displayed in the first display region is varied with time, the image burn-in can be prevented. Since the setting section set color and/or pattern of the alternative image displayed by the alternative image display control section, various preferences of a user can be incorporated in the alternative image to be displayed on the first display region.

According to a second aspect of the preferred embodiments of the present invention, there is provided a picture display apparatus, comprising:
a display section including a display screen, the display screen including a first display region which displays a first picture based on a first picture signal of a plurality of picture signals, and a second display region which displays a second picture based on a second picture signal and which is adjacent to the first display region; and
an alternative image display control section which displays, in the first display region, an alternative image a brightness of which is varied with time, when the first picture signal is not input or when display of the first picture based on the first picture signal is restricted.

In the picture display apparatus, the display screen of the display section includes the first display region which displays the first picture based on the first picture signal of the plurality of picture signals, and the second display region which displays the second picture based on the second picture signal and which is adjacent to the first display region, the alternative image display control section displays, in the first display region, the alternative image whose brightness is varied with time when the first picture signal is not input or when display of the first picture based on the first picture signal is restricted. Therefore, it is possible to provide a picture display apparatus in which since the alternative image is displayed in the first display region, a user can easily recognize that a program selected by the user cannot be displayed, and since the brightness of the alternative image displayed in the first display region is varied with time, the image burn-in can be prevented.

Preferably, the picture display apparatus further includes a brightness detecting section to obtain an average brightness of the second picture displayed in the second display region, and the alternative image display control section varies brightness of the alternative image such that a brightness difference between the average brightness detected by the brightness detecting section and brightness of the alternative image falls within a predetermined range.

In the picture display apparatus, the brightness detecting section obtains the average brightness of the second picture displayed in the second display region, and the alternative image display control section varies brightness of the alternative image such that the brightness difference between the average brightness detected by the brightness detecting section and brightness of the alternative image falls within the predetermined range. Therefore, it is possible to more effectively prevent image burn-in in a boundary between the first display region and the second display region.

Although various exemplary embodiments have been shown and described, the invention is not limited to the embodiments shown. Therefore, the scope of the invention is intended to be limited solely by the scope of the claims that follow.

## Claims

1. A picture display apparatus, comprising:
a display section including a display screen, the display screen including a first display region which displays a first picture based on a first picture signal of a plurality of picture signals, and a second display region which displays a second picture based on a second picture signal and which is adjacent to the first display region;
an alternative image display control section to display, in the first display region, an alternative image a brightness of which is varied with time, when the first picture signal is not input or when display of the first picture based on the first picture signal is restricted;
a brightness detecting section to obtain an average brightness of the second picture displayed in the second display region; and
a setting section to set color and/or pattern of the alternative image displayed in the first display region by the alternative image display control section, wherein
the alternative image display control section varies the brightness of the alternative image such that a brightness difference between the average brightness detected by the brightness detecting section and the brightness of the alternative image falls within a predetermined range.

2. A picture display apparatus, comprising:
a display section including a display screen, the display screen including a first display region which displays a first picture based on a first picture signal of a plurality of picture signals, and a second display region which displays a second picture based on a second picture signal and which is adjacent to the first display region; and
an alternative image display control section which displays, in the first display region, an alternative image a brightness of which is varied with time, when the first picture signal is not input or when display of the first picture based on the first picture signal is restricted.

3. The picture display apparatus according to claim 2, further comprising a brightness detecting section to obtain an average brightness of the second picture displayed in the second display region, wherein
the alternative image display control section varies the brightness of the alternative image such that a brightness difference between the average brightness detected by the brightness detecting section and the brightness of the alternative image falls within a predetermined range.
